# DEMANDE DE BREVET EUROPEEN

(11) **EP 0 894 486 A1**
(43) Date de publication de la demande: **03.02.1999**
(21) Numéro de dépôt: 98460029.6
(22) Date de dépôt: 28.07.1998
(51) Int. Cl.: A61G 3/06, B60G 3/14

(54) **Véhicule automobile pour handicapé**

(30) Priorité: 30.07.1997 FR 9709990
(71) Demandeur: Lamour SARL, 56390 Colpo (FR)
(72) Inventeur: Lamour, Eugène, 56390 Colpo (FR)
(74) Mandataire: Ballot, Paul

(57) **Abrégé**

Ce véhicule est doté d'aménagements permettant son utilisation par une personne handicapée en fauteuil roulant.

Ainsi, il est pourvu d'un dispositif d'abaissement et de relevage de l'arrière de l'habitacle (2), respectivement par remontée et abaissement des roues arrière (4) portées par des bras articulés au châssis, qui éventuellement actionne de plus mécaniquement un mécanisme d'ouverture-fermeture de porte arrière. Le dispositif comprend selon l'invention un axe transversal apte à tourner sur lui-même, une liaison entre chaque bras de roue arrière et ledit axe transversal, par laquelle ce dernier en tournant sur lui-même entraîne en pivotement chaque bras de roue arrière, et un moyen d'entraînement en rotation sur lui-même dudit axe transversal. En position abaissée, l'habitacle permet un accès direct à un fauteuil roulant.

## Description

La présente invention concerne un véhicule automobile doté d'aménagements permettant son utilisation par une personne handicapée en fauteuil roulant. Elle concerne plus particulièrement un tel véhicule de conception légère dénommé communément en France "voiture automobile sans permis".

Les aménagements principaux selon l'invention sont destinés à l'accessibilité de l'habitacle du véhicule et ils comprennent des moyens permettant d'en abaisser l'arrière de telle manière que le plancher s'incline jusqu'à venir au niveau du sol, la voie d'accès étant alors la porte ou hayon arrière.

Des aménagements de ce type sont déjà connus, notamment de par le brevet français n° 2 315 254 au nom de la Société des Etablissements Teilhol, intitulé "Véhicule automobile, notamment pour handicapés physiques". Le véhicule décrit comprend un habitacle accessible par une personne en fauteuil roulant et qui, à cet effet, est abaissable au niveau des roues arrière jusqu'à ce que le plancher vienne en contact avec le sol pour permettre un accès direct par l'arrière. Le dispositif d'abaissement et de relevage comprend des moyens identiques propres à chaque roue arrière. Plus précisément, chaque roue arrière est portée en extrémité d'un bras coudé, lequel est articulé au châssis du véhicule au niveau de son coude, et relié par son autre extrémité à la tige d'un vérin électrique, par l'intermédiaire d'un organe élastique à fonction d'amortisseur. En se déployant simultanément, les deux vérins provoquent la remontée des roues dans l'habitacle, et par conséquent l'abaissement de l'arrière de celui-ci, tandis qu'à l'inverse, en se rétractant, ils les ramènent en position normale pour rouler.

Bien que certainement efficace, ce système présente quelques inconvénients dont tout d'abord le doublement du mécanisme d'abaissement et de relevage propre à chaque roue, qui a des répercussions néfastes au niveau du prix de revient, du risque de panne, ainsi que du poids à vide dont on sait que s'agissant des véhicules sans permis, il est soumis à une limitation par voie réglementaire qui complique la tâche des constructeurs. D'autre part, les vérins d'abaissement et de remontée des roues sont parties intégrantes des ensembles de suspension, et malgré la présence d'amortisseurs, ils sont exposés à tous les chocs et vibrations s'exerçant sur ces ensembles de suspension. Un inconvénient supplémentaire réside dans le fait que les bras de support des roues, au lieu d'être des pièces standard, sont de conception spécifique.

Un premier but visé dans la démarche dont a résulté l'invention a été de prévoir un nouveau dispositif d'abaissement et de relevage de l'arrière d'un véhicule pour permettre un accès direct à un fauteuil roulant, qui tout en restant simple ne présente pas les inconvénients précités, en étant léger, fiable, facile à dépanner, et d'un coût raisonnable du fait de n'être composé que de pièces simples et standard pour la grande majorité d'entre elles.

Le dispositif selon l'invention comprend donc des moyens d'abaissement et de relevage de l'arrière de l'habitacle d'un véhicule automobile dans lequel lesdites roues arrière sont portées par des bras articulés au châssis, et il est caractérisé en ce qu'il comprend un axe transversal monté sur le châssis, apte à tourner sur lui-même, une liaison entre ledit axe et chaque bras de roue arrière, par laquelle ledit axe, en tournant sur lui même, entraîne chaque bras de roue arrière en pivotement autour de son articulation au châssis, et un moyen assurant la rotation sur lui-même dudit axe transversal entre une première position pour laquelle les roues arrière sont abaissées en position normale ou position route et une seconde position pour laquelle les roues arrière sont relevées dans l'habitacle de telle façon que l'arrière du plancher de l'habitacle soit abaissé jusqu'au sol pour permettre un accès direct à un fauteuil roulant.

Dans une forme de réalisation préférée, ledit moyen d'entraînement en rotation sur lui-même dudit axe transversal est un vérin électrique.

Selon d'autres caractéristiques de l'invention concernant ladite liaison entre ledit axe transversal et chaque bras de roue arrière :
- elle est avantageusement agencée de telle manière que les chocs et vibrations dont elle est l'objet ne sont pas transmis via ledit axe transversal au moyen d'entraînement en rotation sur lui-même de celui-ci ;
- elle peut comprendre une patte solidaire dudit axe transversal et une patte solidaire du bras de roue, aux extrémités desquelles est articulé un ensemble de liaison intermédiaire ;
- l'ensemble intermédiaire comprend de préférence un amortisseur.

L'invention concerne également des aménagements supplémentaires, à savoir des aménagements assurant l'ouverture et la fermeture automatiques de la porte ou hayon arrière, et des aménagements destinés au guidage, au positionnement et l'assujettissement d'un fauteuil roulant à l'intérieur de l'habitacle.

Ainsi, selon une autre caractéristique de l'invention, dans un véhicule dont l'arrière est abaissable pour permettre un accès direct à un fauteuil roulant, au moyen d'un dispositif d'abaissement et de remontée des roues arrière, une tringlerie est prévue entre ledit dispositif et le hayon ou porte arrière à pivotement autour d'un axe supérieur, qui assure l'ouverture en grand du hayon ou porte arrière lors de la remontée des roues pour l'abaissement de l'arrière de l'habitacle, et son retour en position fermée lors de l'abaissement des roues en position de route.

Selon une autre caractéristique de l'invention, le plancher de l'habitacle comporte des moyens destinés au guidage d'au moins les roues avant d'un fauteuil roulant pour l'amener en position de conduite. De préférence, à ces moyens de guidage sont associés des moyens d'assujettissement d'au moins les montants de roue avant d'un fauteuil roulant dans la position de conduite.

Ces caractéristiques et avantages de l'invention, ainsi que d'autres, apparaîtront plus clairement à la lecture de la description suivante, donnée non limitativement à titre d'exemple, et faite en relation avec les dessins joints, dans lesquels :
la Fig. 1 est une vue schématique de côté d'un véhicule selon l'invention en position abaissée ;
la Fig. 2 est une vue schématique en perspective illustrant les moyens essentiels de l'invention et leur montage sur un châssis de véhicule tel que celui de la Fig. 1 ;
la Fig. 3 est une vue schématique de côté des moyens essentiels de l'invention ;
la Fig. 4 est une vue schématique en coupe verticale longitudinale d'une partie de plancher de véhicule formant rail de guidage pour un fauteuil roulant d'handicapé ; et
la Fig. 5 est une vue schématique de dessus d'une pince servant à l'assujettissement d'un fauteuil roulant d'handicapé en position de conduite.

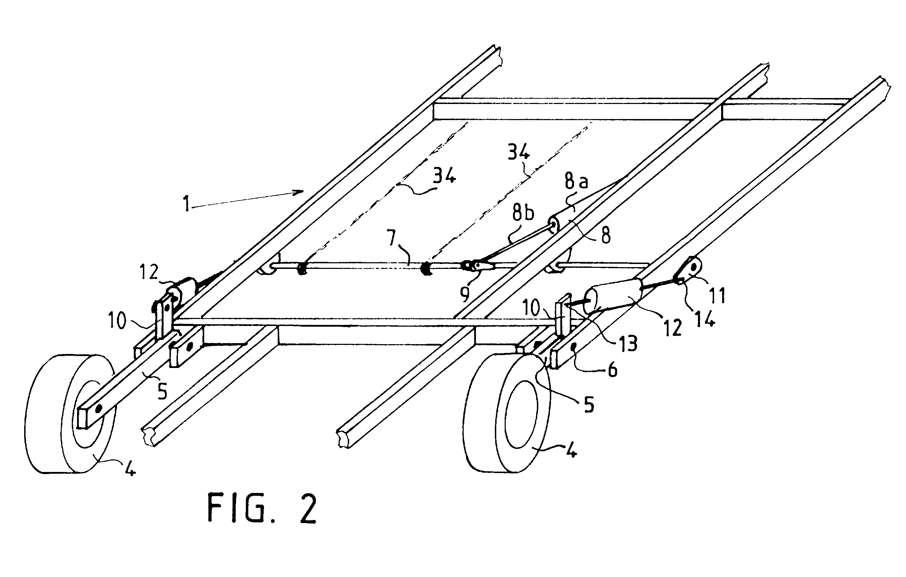

Le véhicule automobile représenté dans les dessins est un véhicule léger dit "voiture sans permis", dont la caisse, avantageusement en matériau composite, est montée sur un châssis 1 partiellement représenté à la Fig. 2. L'habitacle 2 comporte un accès pour fauteuil roulant d'handicapé, s'agissant d'une porte arrière 3, de type hayon à pivotement autour d'un axe supérieur de préférence.

L'habitacle 2 ne présente pas de caractéristiques particulières, sinon que les coffres de roue arrière sont plus hauts que la normale, et que le plancher comporte des aménagement pour le guidage et l'assujettissement en position de conduite d'un fauteuil roulant, qui seront décrits en détail dans la suite.

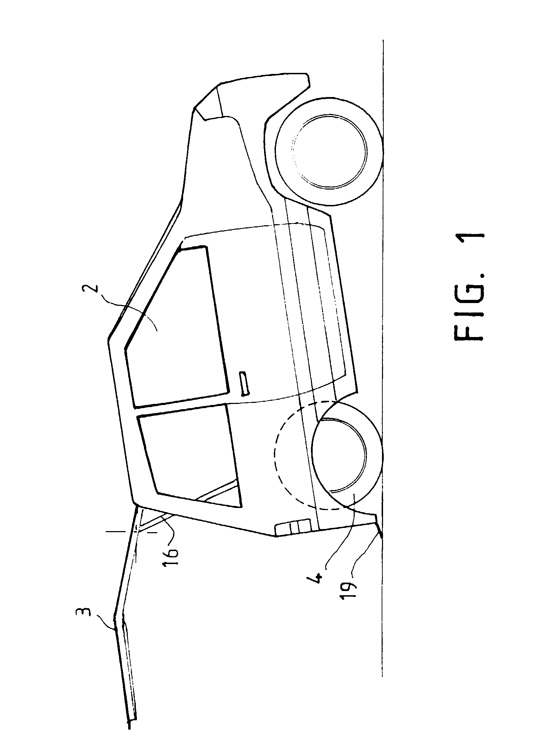

Comme le montre la Fig. 1, pour permettre l'accès d'un fauteuil roulant, le véhicule s'affaisse de façon contrôlée sur ses roues arrière 4, jusqu'à ce que le bord arrière du plancher vienne à proximité immédiate du sol, éventuellement jusqu'à le toucher. Le véhicule retrouve une position normale ou position de route par remontée de l'habitacle par rapport aux roues arrière.

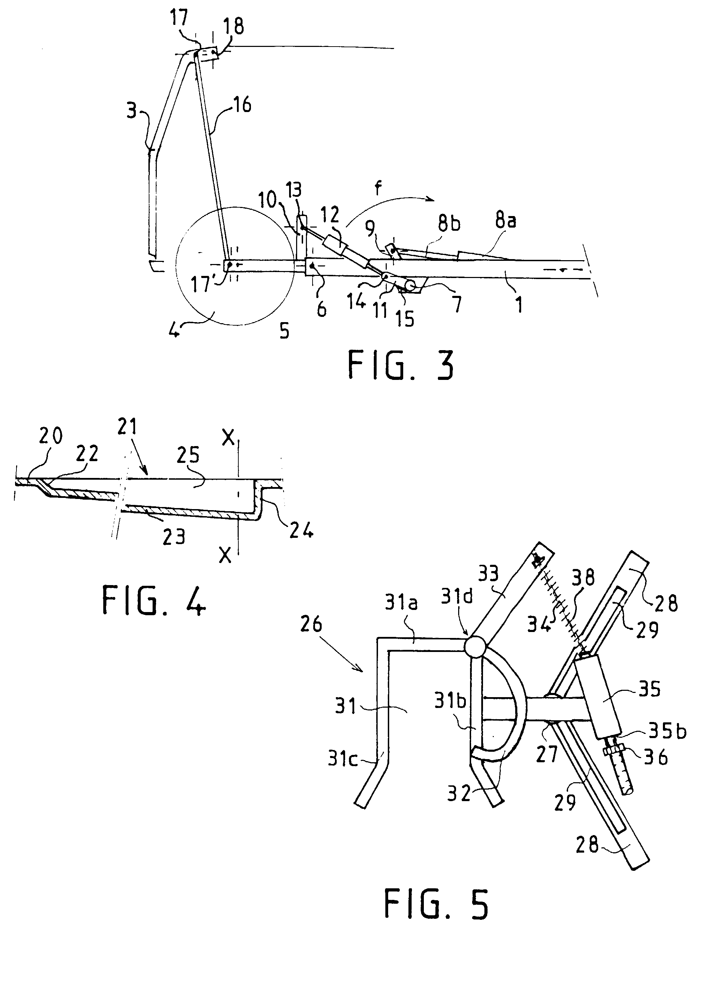

Le dispositif d'abaissement et de relevage de l'habitacle 2 est illustré aux Figs. 2 et 3. Il comprend essentiellement des moyens permettant de faire pivoter des bras de support de roue arrière 5 entre une première position ou position de route et une seconde position ou position de chargement/déchargement. Comme mentionné précédemment, les bras de roue 5 peuvent être des éléments standard, montés pivotants par rapport au châssis 1 autour d'un axe d'articulation horizontal 6, et portant la roue 4 près de leur extrémité distale. Aux Figs. 2 et 3, les bras 5 sont montrés en position de route (sensiblement horizontale). Le passage en position de chargement résulte d'un pivotement vers le haut des bras 5 dont l'ordre de grandeur se situe aux environs de 15 à 20°.

Les bras 5 sont entraînés en pivotement par un axe commun 7 monté transversalement sur le châssis 1. L'axe 7 est porté libre en rotation sur lui-même dans des paliers fixés sous des longerons. Il est entraîné en rotation entre deux positions correspondant auxdites position de route et position de chargement au moyen d'un vérin 8 qui est avantageusement un vérin électrique. Comme représenté, le corps 8a du vérin est par exemple articulé sur le côté d'un longeron du châssis, et sa tige 8b dans une chape formée par deux pattes 9 solidaires de l'axe 7 et dirigées radialement par rapport à lui.

La liaison entre l'axe 7 et chaque bras de roue 5 comprend une patte 10 solidaire du bras 5, dirigée vers le haut et sensiblement perpendiculaire à lui, une patte 11 solidaire de l'axe 7 et dirigée radialement par rapport à lui, et un ensemble 12 articulé en 13 par une extrémité à l'extrémité distale de la patte 10, et en 14 par l'autre extrémité à l'extrémité distale de la patte 11. En pratique, l'ensemble 12 comprend le système de suspension de roue arrière, soit la combinaison d'un ressort de suspension et d'un amortisseur.

La Fig. 3 montre clairement que lorsque le vérin 8 se rétracte, la patte 11 en pivotant dans le sens des aiguilles d'une montre (flèche f) va commander le pivotement dans le même sens de la patte 10 et, par voie de conséquence, celui du bras 5. Etant donné que le pivotement des deux bras 5 est assuré par des moyens communs que sont l'axe 7 et le vérin 8, il s'opère des deux côtés de façon exactement identique et concomitante.

A la Fig. 3, on peut remarquer également que dans la position représentée qui est la position de route, l'articulation 14 a dépassé en provenant de la position de chargement/déchargement, une position intermédiaire d'alignement avec l'axe 7 et l'axe d'articulation 13, jusqu'à ce que la patte 11 solidaire de l'axe 7 vienne s'appuyer contre une butée de limitation de pivotement 15. Il en résulte qu'en position de route, tous les efforts s'exerçant sur l'ensemble de suspension 12 sont absorbés au niveau de l'appui de la patte 11 sur la butée 15, sans aucune répercussion sur le vérin 8 qui est donc parfaitement protégé de toute sollicitation parasite.

Selon une autre caractéristique de l'invention, il est prévu une liaison mécanique entre le dispositif d'abaissement et de relevage du véhicule et la porte ou hayon arrière 3, qui en assure l'ouverture automatique lors de l'abaissement du véhicule, et son retour en position de fermeture lors de la remontée du véhicule en position de route. De préférence, ce système automatique d'ouverture et de fermeture de porte arrière est combiné avec un verrou électrique. A la Fig. 3, la commande automatique d'ouverture/fermeture de la porte arrière consiste en une tringle 16 de chaque côté, articulée d'une part en 17' sur un bras de roue arrière 5, et d'autre part en un point 17 sur le côté du hayon, judicieusement placé par rapport à l'axe de pivotement 18 de ce dernier.

Il peut être prévu en outre un seuil basculant 19, Fig. 1, articulé au bord arrière du plancher de l'habitacle, et commandé également par les bras 5, par l'intermédiaire d'un système de pattes non représenté.

Les Figs. 4 et 5 illustrent des moyens servant au guidage d'un fauteuil roulant dans l'habitacle 2, ainsi qu'à son positionnement et son assujettissement en position de conduite. A la Fig. 4, le plancher 20 de l'habitacle est représenté en coupe longitudinale, au niveau de l'un de deux rails de guidage en creux 21 orientés longitudinalement, destinés à recevoir chacun les roues arrière et avant de même côté d'un fauteuil roulant. De l'arrière vers l'avant, le rail 21 comporte une rampe d'accès 22 relativement pentue, et un fond 23 légèrement incliné descendant vers l'avant limité par une paroi avant 24 qui, de préférence, est sensiblement verticale de même que les parois latérales 25. Le rail 21 est suffisamment large pour que les roues avant d'un fauteuil puissent y pivoter sur 360°. L'inclinaison du fond 23 des rails 21 est prévue principalement en vue d'une meilleure position de conduite, par correction de l'assiette du fauteuil roulant qui, pour des raisons de confort et d'ergonomie, est légèrement penché en arrière en position d'utilisation normale. A noter également l'avantage de l'abaissement global du fauteuil par engagement de ses roues dans les rails en creux 21.

Aux rails 21, sont associés des éléments de préhension ou pinces 26, dont la fonction est de recevoir et d'emprisonner les montants des roues avant du fauteuil lorsque celui-ci parvient, guidé par les rails, à la position de conduite.

Une pince 26 est fixée sur le côté de la partie avant de chaque rail 21, approximativement au niveau de la ligne verticale X-X à la Fig. 4. Comme le montre la Fig. 5, elle comprend une partie de support avec essentiellement un montant 27 dont la base est solidaire de moyens de fixation sur le plancher du véhicule, s'agissant ici de deux barres plates 28 formant entre elles un angle obtus. Ont également été représentés des arcs-boutants 29 renforçant la liaison entre le montant 27 et les barres plates 28.

Sur le sommet du montant 27, est fixé un bras horizontal 30 dépassant des deux côtés. Le bras 30 porte à son tour, en l'une de ses extrémités, une chape ou anse 31 constituant la partie fixe de la pince proprement dite. L'anse 31 est destinée à être placée au-dessus du rail 21, ouverte vers l'arrière de celui-ci. Elle comprend un fond 31a et deux bras latéraux 31b, 31c. De préférence, elle s'évase vers l'extérieur en la partie distale des bras 31b, 31c, de manière à embrasser au moins la plus grande partie de la largeur du rail 21, et à former un guide vers la partie de fond plus resserrée.

En le coin 31d de l'anse 31 le plus proche du bras 30, une patte 32 est articulée autour d'un axe vertical, qui constitue la partie mobile de la pince proprement dite. En position d'ouverture, la patte 32 est escamotée complètement par rapport à l'anse 31, sur le côté de son bras latéral 31b. Elle a une forme courbe de manière à présenter une concavité ouverte vers le fond de l'anse 31 lorsqu'elle referme celle-ci. Elle est donc apte à assurer le centrage et l'assujettissement dans l'anse 31 d'un montant de roue avant de fauteuil roulant.

Selon une autre caractéristique de l'invention, la pince 26 est de préférence commandée par l'axe 7 du dispositif d'abaissement et de relevage de l'arrière du véhicule, au moyen d'un système de câble.

A cet effet, la patte articulée 32 est prolongée par un bras d'actionnement 33 comportant des moyens d'ancrage d'un câble de commande 34 en son extrémité distale. D'autre part, le bras 30 porte en son extrémité distante de l'anse 31 un cylindre de passage de câble 35 pourvu en son extrémité 35b d'une molette de réglage 36. A partir de l'extrémité 35b du cylindre 35, le câble 34 est conduit classiquement sur le châssis 1, Fig. 2, jusqu'en l'extrémité distale d'une patte 37 solidaire de l'axe 7 : lorsque celui-ci tourne sur lui-même dans le sens de l'abaissement de l'arrière de l'habitacle 2, il relâche le câble 34, et la pince 26 s'ouvre de par l'action d'un ressort de rappel, lequel est avantageusement un ressort hélicoïdal 38 monté autour du câble 34 entre le bras 33 et le cylindre 35 ; lorsqu'au contraire, l'axe 7 tourne dans le sens du relevage en position de route de l'arrière de l'habitacle 2, il s'opère en même temps une traction du câble 34 qui actionne le bras 33 en fermeture de la patte 32 de la pince.

Il convient de noter que l'ensemble des automatismes décrits ci-dessus sont obtenus mécaniquement à partir de l'actionnement d'un unique organe qu'est le vérin 8, et qu'aux avantages déjà mentionnés de fiabilité et de facilité de maintenance que cela procure, s'ajoute celui de la simplicité de l'électronique nécessaire au pilotage du système, qui ne diffère que très peu d'une télécommande classique d'ouverture/fermeture des portes. Enfin, il va sans dire que bien que plus spécialement conçus en vue d'une application à une voiture légère dit "sans permis", les aménagements selon l'invention peuvent équiper tous types de véhicules automobiles.

## Revendications

1. Véhicule automobile pourvu d'un dispositif d'abaissement et de relevage de l'arrière de son habitacle (2), respectivement par remontée et abaissement des roues arrière (4) par rapport à ce dernier, destiné à permettre l'accès direct par l'arrière à un fauteuil roulant, et dans lequel lesdites roues arrière (4) sont portées par des bras (5) articulés au châssis (1), caractérisé en ce que ledit dispositif comprend un axe transversal (7) monté sur le châssis (1), apte à tourner sur lui-même, une liaison entre l'axe (7) et chaque bras de roue arrière (5), par laquelle l'axe (7), en tournant sur lui-même, entraîne chaque bras de roue arrière en pivotement autour de son articulation au châssis (1), et un moyen assurant la rotation sur lui-même de l'axe transversal (7) entre une première position pour laquelle les roues arrière (4) sont abaissées en position normale ou position de route, et une seconde position pour laquelle les roues arrière (4) sont relevées dans l'habitacle (2), de telle façon que l'arrière du plancher de l'habitacle (2) soit abaissé jusqu'au sol.

2. Véhicule selon la revendication 1, caractérisé en ce que dans ledit dispositif d'abaissement et de relevage de l'arrière de l'habitacle (2), le moyen d'entraînement en rotation sur lui-même de l'axe (7) est un vérin électrique (8).

3. Véhicule selon la revendication 1 ou 2, caractérisée en ce que ladite liaison entre l'axe transversal (7) et chaque bras de roue arrière (5) est agencée de telle manière que les chocs et vibrations dont elle est l'objet ne sont pas transmis via ledit axe transversal (7) au moyen d'entraînement en rotation sur lui-même de ce dernier.

4. Véhicule selon l'une des revendications 1 à 3, caractérisé en ce que ladite liaison entre l'axe transversal (7) et chaque bras de roue arrière (5) comprend une patte (11) montée radialement solidaire de l'axe transversal (7) et une patte (10) solidaire du bras de roue arrière (5), aux extrémités desquelles est articulé un ensemble de liaison intermédiaire (12).

5. Véhicule selon la revendication 4, caractérisé en ce que ledit ensemble liaison intermédiaire (12) comprend un système de suspension de roue arrière pourvu d'un amortisseur.

6. Véhicule automobile selon l'une des revendications 1 à 5, et dans lequel la porte arrière (3) de l'habitacle (2) est de type hayon à pivotement autour d'un axe supérieur, caractérisé en ce qu'une tringlerie (16) est prévue entre les bras de roue arrière (5) et ladite porte arrière (3), qui assure l'ouverture en grand de la porte (3) lors de la remontée des roues arrière (4) pour l'abaissement de l'arrière de l'habitacle (2), et son retour en position fermée lors de l'abaissement des roues arrière en position de route.

7. Véhicule selon l'une des revendications 1 à 6, caractérisé en ce que le plancher (20) de l'habitacle (2) comporte des moyens destinés au guidage d'au moins les roues avant d'un fauteuil roulant pour l'amener en position de conduite.

8. Véhicule selon la revendication 7, caractérisé en ce que lesdits moyens de guidage sont des rails en creux (21) formés dans le plancher (20).

9. Véhicule selon la revendications 7 ou 8, caractérisé en ce qu'auxdits moyens de guidage du plancher (20), sont associés des moyens d'assujettissement d'au moins les montants de roue avant d'un fauteuil roulant dans la position de conduite.

10. Véhicule selon la revendication 9, caractérisé en ce que lesdits moyens d'assujettissement sont des pinces (26) destinées à assujettir les montants de roue avant d'un fauteuil roulant, lesquelles pinces (26) sont actionnées au moyen de câbles (34) par les mouvements en rotation sur lui-même de l'axe (7) produisant l'abaissement et la remontée des roues arrière (4).
